(19) Europäisches Patentamt
European Patent Office
Office européen des brevets

(11) EP 4 778 995 A1

(12) EUROPEAN PATENT APPLICATION
published in accordance with Art. 153(4) EPC

(43) Date of publication:
**22.07.2026 Bulletin 2026/30**

(21) Application number: **25875374.8**

(22) Date of filing: **11.09.2025**

(51) International Patent Classification (IPC):
***C09K 19/52** (2006.01)* ***C09K 19/54** (2006.01)*
***G02F 1/1334** (2006.01)*

(52) Cooperative Patent Classification (CPC):
**C09K 19/52; C09K 19/54; G02F 1/1334**

(86) International application number:
**PCT/KR2025/095549**

(87) International publication number:
**WO 2026/075539 (09.04.2026 Gazette 2026/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.10.2024 KR 20240133749**

(71) Applicant: **LG Chem, Ltd.**
**Seoul 07336 (KR)**

(72) Inventors:
- **KIM, Yeji**
  **Daejeon 34122 (KR)**
- **KIM, Jinhong**
  **Daejeon 34122 (KR)**
- **KIM, Jee Seon**
  **Daejeon 34122 (KR)**
- **KIM, Yunseop**
  **Daejeon 34122 (KR)**

(74) Representative: **Hoffmann Eitle**
**Patent- und Rechtsanwälte PartmbB**
**Arabellastraße 30**
**81925 München (DE)**

# (54) LIQUID CRYSTAL NANO-CAPSULE, AND CAPSULE SOLUTION, OPTICAL FILM, OPTICAL DEVICE, TRANSMITTANCE VARIABLE DEVICE USING SAME

(57) The present invention relates to a liquid crystal nano capsule, comprising: a core containing liquid crystal; and a polymer shell formed on a surface of the core; wherein a sum of an onset temperature change value according to the Mathematical Formula 1 and a peak temperature change value according to the Mathematical Formula 2 is 37.5 °C or less, and capsule solution, optical film, optical device, transmittance variable device using the same.

EP 4 778 995 A1

## Description

[TECHNICAL FIELD]

CROSS-REFERENCE TO RELATED APPLICATION(S)

This application claims the benefit of Korean Patent Application No.10-2024-0133749 filed on October 2, 2024 with the Korean Intellectual Property Office, the disclosures of which are herein incorporated by reference in their entirety.

The present invention relates to a liquid crystal nano capsule, and capsule solution, optical film, optical device, transmittance variable device using the same that may induce a high transmittance variation rate even at a lower voltage by lowering the surface interaction energy of the liquid crystal encapsulated inside the capsule.

[BACKGROUND ART]

Polymer Dispersed Liquid Crystals (PDLC) films are applicable to high-luminance projection displays or high-contrast reflective display devices, and are composite materials in which liquid crystal molecular domains of several micrometers are dispersed in a polymer between conductive films. The driving principle of the PDLC is that light incident on a polymer layer in which liquid crystal is dispersed is scattered by a difference in refractive index between the liquid crystal and the polymer to be in an opaque state, but by applying an electric field thereto, the direction of the liquid crystal is aligned and the refractive index is changed, thereby controlling scattering and transmission of light to become a transparent state.

As such, PDLC devices do not require a separate polarizer and thus do not require a polarizing plate in terms of structure, and do not require an alignment process in terms of process, so that the PDLC devices may be manufactured by a simple method. Accordingly, the PDLC devices may be applied to smart glass and smart screens for buildings and automobiles corresponding to switchable windows, and may also be applied as black PDLC films for transparent OLEDs. In addition, the PDLC devices may be manufactured in a flexible form depending on a material used as a substrate.

Specifically, a liquid crystal-based smart window refers to an active window capable of controlling transmittance with glass including a separate liquid crystal layer, and is a technology applicable to the field of mobility as well as buildings. Through conventional polymer dispersed liquid crystal (PDLC) technology, liquid crystal domains having a size of several μm could be manufactured by mixing a monomer capable of light or thermal polymerization with liquid crystal and by phase separation between the polymer and the liquid crystal occurring during polymerization. The PDLC film may implement a light-shielding/transmission mode as the liquid crystal within the domains of several μm size has a refractive index that matches/mismatches with a polymer matrix according to voltage application on/off. However, in the PDLC, it is difficult to overcome a disadvantage of scattering visible light due to the liquid crystal domains larger than a visible light wavelength range.

On the other hand, in a case where the liquid crystal is domain-sized to a size of 380 nm or less, which is a minimum wavelength of visible light, a scattering issue may be improved, so that a transmittance variable liquid crystal film layer having superior haze may be manufactured.

In particular, in a case of manufacturing a color-type PDLC including a dye, there is a problem that anisotropic dyes are not uniformly aligned in a polymer according to an electric field, and in particular, a problem of contamination of a polymer matrix by the dye occurs. Accordingly, various studies are being conducted on a liquid crystal composite having a capsule structure in which liquid crystal and anisotropic dyes are encapsulated in a polymer shell to have excellent mechanical properties and high uniformity, and to prevent contamination of the polymer matrix by the dye.

However, as the liquid crystal and the anisotropic dye are encapsulated in the polymer shell, the liquid crystal encapsulated in the capsule has a limitation in that the alignment of the liquid crystal is changed only when a higher voltage is applied due to a high interaction occurring as a contact area with a material contained in the capsule shell increases.

[DETAILED DESCRIPTION OF THE INVENTION]

[Technical Problem]

The present invention is to provide a liquid crystal nano capsule that may induce a high transmittance variation rate even at a lower voltage by lowering the surface interaction energy of the liquid crystal encapsulated inside the capsule.

In addition, the present invention is to provide capsule solution, optical film, optical device, transmittance variable device using the liquid crystal nano capsule.

[Technical Solution]

In order to solve the above problem, in this specification, there is provided a liquid crystal nano capsule,

comprising: a core containing liquid crystal; and a polymer shell formed on a surface of the core; wherein a sum of an onset temperature change value according to the following Mathematical Formula 1 and a peak temperature change value according to the following Mathematical Formula 2 is 37.5 °C or less:

Onset temperature change value = (Minimum temperature at which endotherm or exotherm occurs during DSC measurement of the liquid crystal nano capsule) - (Minimum temperature at which endotherm or exotherm occurs during DSC measurement of the liquid crystal) [Mathematical Formula 1]

Peak temperature change value = (Temperature at a peak where endotherm or exotherm is maximum during DSC measurement of the liquid crystal nano capsule) - (Temperature at a peak where endotherm or exotherm is maximum during DSC measurement of the liquid crystal). [Mathematical Formula 2]

This specification also provides a capsule solution, comprising the liquid crystal nano capsule and a solvent.

This specification also provides an optical film, comprising the liquid crystal nano capsule.

This specification also provides an optical device, comprising the optical film.

This specification also provides a transmittance variable device, comprising the optical film.

Hereinafter, a liquid crystal nano capsule, and capsule solution, optical film, optical device, transmittance variable device using the same according to specific embodiments of the invention will be explained in detail.

Unless explicitly stated herein, the technical terms used herein are for the purpose of describing specific embodiments only and is not intended to limit the scope of the invention.

As used herein, the singular forms also include the plural forms unless the context clearly dictates otherwise.

It should be understood that the terms "comprise," "include", "have", etc. are used herein to specify the presence of stated feature, region, integer, step, action, element and/or component, but do not preclude the presence or addition of one or more other feature, region, integer, step, action, element, component and/or group.

Further, the terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present disclosure.

Further, the derivative compound refers to a compound changed within a limit that does not significantly change a structure and properties of a parent body, such as introduction of a functional group, oxidation, reduction, and substitution of atoms, when an organic compound is the parent body.

Further, the weight average molecular weight refers to a polystyrene-converted weight average molecular weight measured by gel permeation chromatography(GPC). In the process of measuring the polystyrene-converted weight average molecular weight measured by GPC, a detector and an analytical column, such as a commonly known analysis apparatus and differential refractive index detector can be used, and commonly applied temperature conditions, solvent, and flow rate can be used. Specific examples of the measurement condition are as follows: Waters PL-GPC220 instrument was used and a Polymer Laboratories PLgel MIX-B 300 mm length column was used. An evaluation temperature was 160°C, and 1,2,4-trichlorobenzene was used for a solvent at a flow rate of 1 mL/min. Samples were prepared at a concentration of 10 mg/10 mL and then supplied in an amount of 200 μL, and the values of Mw could be determined using a calibration curve formed using a polystyrene standard. 9 Kinds of the polystyrene standards were used with the molecular weight of 100 / 500 / 1000 / 2,000 / 10,000 / 30,000 / 70,000 / 200,000 / 700,000.

Now, the present disclosure will be described in more detail.

1. Liquid crystal nano capsule

According to one embodiment of the invention, a liquid crystal nano capsule can be provided, comprising: a core containing liquid crystal; and a polymer shell formed on a surface of the core; wherein a sum of an onset temperature change value according to the following Mathematical Formula 1 and a peak temperature change value according to the following Mathematical Formula 2 is 37.5 °C or less:

Onset temperature change value = (Minimum temperature at which endotherm or exotherm occurs during DSC measurement of the liquid crystal nano capsule) - (Minimum temperature at which endotherm or exotherm occurs during DSC measurement of the liquid crystal) [Mathematical Formula 1]

Peak temperature change value = (Temperature at a peak where endotherm or exotherm is maximum during DSC measurement of the liquid crystal nano capsule) - (Temperature at a peak where endotherm or exotherm is maximum during DSC measurement of the liquid crystal). [Mathematical Formula 2]

The present inventors have confirmed through experiments that, as in the liquid crystal nano capsule of the above embodiment, a sum of an onset temperature change value according to the Mathematical Formula 1 and a peak temperature change value according to the Mathematical Formula 2 is 37.5 °C or less, and thus the surface interaction energy of the liquid crystal encapsulated inside the capsule may be lowered, thereby inducing a high transmittance variation rate even at a lower voltage, and have completed the invention

Thermotropic liquid crystal is basically a material in which phase transition occurs due to an increase in molecular mobility caused by a temperature rise. An example of the thermotropic liquid crystal includes a liquid crystal in which nematic liquid crystal changes into an isotropic liquid, and a phase transition temperature at this time is referred to as Tni (Temperature from nematic to isotropic phase).

Nematic liquid crystal has a characteristic of being aligned according to a surface to which the liquid crystal is exposed, and this is referred to as a surface anchoring effect. As the interaction with a surface material is higher, more voltage is required to move the liquid crystal. The liquid crystal encapsulated inside a capsule has an increased surface anchoring energy by a capsule shell, and thus an alignment of the liquid crystal may be changed only when a higher voltage is applied. Therefore, when the surface anchoring energy of the liquid crystal in the capsule is lowered, a higher transmittance variation rate may be induced even at a lower voltage.

The onset temperature change value according to the Mathematical Formula 1 and the peak temperature change value according to the Mathematical Formula 2 are parameters regarding the aforementioned difference in Tni (Temperature from nematic to isotropic phase). When the onset temperature change value according to the Mathematical Formula 1 and the peak temperature change value according to the Mathematical Formula 2 become smaller, it means that the surface anchoring energy of the liquid crystal in the capsule is relatively low, and because of this, the transmittance variation rate may increase even at a low voltage. Specifically, when the onset temperature change value according to the Mathematical Formula 1 and the peak temperature change value according to the Mathematical Formula 2 become smaller, there is provided a liquid crystal nano capsule capable of low-voltage driving at a lower threshold voltage and having a high contrast ratio and excellent transmittance variable characteristics.

And, as will be described later, satisfying the onset temperature change value according to the Mathematical Formula 1 and the peak temperature change value according to the Mathematical Formula 2 is a result of lowering the surface anchoring energy of the liquid crystal in the capsule by mixing a unique emulsifier of the present invention and a siloxane-based additive.

Specifically, the liquid crystal nano capsule of the embodiment may include a core containing liquid crystal. The structure of the liquid crystal nano capsule according to the present invention is characterized in that the liquid crystal is contained inside and encapsulated by a shell made of a polymer. Due to this, uniformity of liquid crystal particles may be improved.

The liquid crystal is not particularly limited, but examples thereof may include nematic liquid crystal, smectic liquid crystal, cholesteric liquid crystal, chiral nematic liquid crystal, and the like. A specific type of liquid crystal compound is not limited, and various conventionally known liquid crystals may be used without limitation. The liquid crystal is not particularly limited, but specifically, there is provided (trans,trans)-4-Ethenyl-4'-propyl-1,1'-bicyclohexyl, or 1,2,3-Trifluoro-5-[(trans,trans)-4'-ethyl[1,1'-bicyclohexyl]-4-yl]benzene, or 1,2,3-Trifluoro-5-[(trans,trans)-4'-propyl[1,1'-bicyclohexyl]-4-yl]benzene, or Benzene,1,2,3-trifluoro-5-[(trans,trans)-4-pentyl[1,1'-bicyclohexyl]-4-yl], or trans-1-Ethoxy-4-(4-propylcyclohexyl)benzene, or [trans(trans)]-1,2-Difluoro-4-(4-propyl-1'-bicyclohexyl]-4-yl)benzene, or Benzene,1,2-difluoro-4-[(trans,trans)-4'-pentyl[1,1'-bicyclohexyl]-4-yl], or 2,3',4'5'-Tetrafluoro-4-[(trans,trans)-4'-propyl[bicyclohexyl]-4-yl]-1,1'-biphenyl, or 5-(Difluoro[(trans,trans)-4'-propyl[1,1'-bicyclohexyl]-4-yl]methoxy]-1,2,3-trifluorobenzene, or [1,1-Bicyclohexyl]-4-carboxylic acid,4'-propyl-, 3,4,5-trifluorophenyl ester, (trans,trans)-, or [1,1'-Bicyclohexyl]-4-carboxylic acid, 4'-pentyl-, 3,4,5-trifluorophenyl ester, (trans,trans)-, or a mixture thereof.

More specifically, the liquid crystal may be a fluorine-based liquid crystal. The fluorine-based liquid crystal is a liquid crystal material having a fluorine atom in a molecular structure thereof, and has low viscosity and low relative permittivity, so that introduction of ionic impurities is low. When a fluorine-based liquid crystal is used as the liquid crystal material, refractive index anisotropy is relatively low, and thus low haze may be caused. Deterioration of performance, such as a decrease in voltage holding ratio due to impurities, is reduced, and surface anchoring energy may be lowered when in contact with a surface of a capsule shell during encapsulation in a capsule.

A ratio of the liquid crystal contained in the liquid crystal nano capsule of the embodiment is not significantly limited, but for example, the liquid crystal may be contained in a range of 10% by mass to 20% by mass. Within the range, sufficient liquid crystal performance may be obtained, and at the same time, a thickness of the polymer shell becomes

sufficient, so that durability of the liquid crystal nano capsule may be improved.

A method of measuring the ratio of the liquid crystal contained in the liquid crystal nano capsule is not limited, and various conventionally known methods may be applied without limitation. However, as an example, after freeze-drying 5 mL of a capsule solution, a mass is measured to calculate a solid content in a unit volume, and then 1 mg of the freeze-dried capsule solution is put into TGA2 equipment of METTLER TOLEDO, and a temperature is raised from 50 °C up to 700 °C at a heating rate of 10 °C/min. While confirming a mass decrease according to temperature, a liquid crystal ratio (% by mass) may be obtained through a mass ratio decreased in a range of 200 °C to 300 °C.

Meanwhile, the core may further include an emulsifier and a siloxane-based additive. The emulsifier is a surfactant used for forming liquid crystal droplets, and when applied together with the siloxane-based additive, an interfacial tension of the liquid crystal in a capsule is lowered, so that surface anchoring energy of the liquid crystal may be significantly lowered.

In particular, based on 100 parts by weight of the emulsifier, a content of the siloxane-based additive may be in a range of 5 parts by weight to 50 parts by weight, or in a range of 5 parts by weight to 20 parts by weight, or in a range of 9 parts by weight to 19 parts by weight, or in a range of 9.2 parts by weight to 18.4 parts by weight. When the content of the siloxane-based additive is excessively decreased based on 100 parts by weight of the emulsifier, an effect of lowering the surface tension of the liquid crystal by the siloxane-based additive may not be sufficiently implemented, and thus there is a limit in that the surface anchoring energy of the liquid crystal in the capsule cannot be sufficiently lowered. In addition, when the content of the siloxane-based additive is excessively increased based on 100 parts by weight of the emulsifier, a problem may occur in which a state of the liquid crystal (mesophase state) may be changed into an isotropic liquid phase.

The emulsifier is a non-ionic surfactant used for forming liquid crystal droplets, and any surfactant that is not ionized in an aqueous solution may be used without limitation. Types of non-ionic surfactants are well known in the art, and known non-ionic surfactants may be used without limitation. In one embodiment, the non-ionic surfactant may be, but is not limited to, an amphiphilic block copolymer, polyoxyethylene alkyl ether, polyoxyethylene fatty acid ester, sorbitol fatty acid ester, or glycerin fatty acid ester. For example, the non-ionic surfactant includes cetomacrogol 1000, cetostearyl alcohol, cetyl alcohol, cocamide diethanolamine (cocamide DEA), cocamide monoethanolamine (cocamide MEA), decyl glucoside, Igepal CA-630, isoceteth-20, lauryl glucoside, monolaurin, octylphenoxypolyethoxyethanol, nonoxynol-9, NP-40, octaethylene glycol monododecyl ether, N-octyl beta-D-thioglucopyranoside, octyl glucoside, oleyl alcohol, pentaethylene glycol monododecyl ether, poloxamer, polyglycerol polyricinoleate, polysorbate, sorbitan monostearate, sorbitan tristearate, stearyl alcohol, Triton X-100, Tween 80, poly(ethylene oxide-b-propylene oxide), polyoxyethylene-b-polydimethylsiloxane, and the like.

However, the emulsifier may have an ethylene oxide repeating unit content of less than 0.001 mol% based on 100 mol% of the emulsifier. That is, the emulsifier may not contain an ethylene oxide repeating unit or may contain it in an extremely small amount. When the ethylene oxide repeating unit content in the emulsifier increases to 0.001 mol% or more based on 100 mol% of the emulsifier, as van der Waals interaction between electrophilic fluorine elements in the fluorine-based liquid crystal and the ethylene oxide repeating unit increases, the onset temperature change value according to the Mathematical Formula 1 and the peak temperature change value according to the Mathematical Formula 2 increase, and thus it is difficult to sufficiently lower the surface anchoring energy of the liquid crystal in the capsule.

More specifically, the emulsifier may include an acetylenic diol-based compound. The acetylenic diol-based compound may include an acetylenic diol compound or a derivative thereof.

The acetylenic diol-based compound may have an HLB (Hydrophile Lipophile Balance) value in a range of 2 to 4, or in a range of 2 to 3. In general, in order to make a stable oil-in-water emulsion using a conventional emulsifier, it is necessary for the emulsifier to be adsorbed at an aqueous phase/oil phase interface to form liquid crystals, and for this purpose, the HLB (Hydrophile Lipophile Balance) value of the emulsifier to be used should be carefully adjusted according to a polarity of the oil phase.

Specifically, the HLB may be calculated by the following Mathematical Formula 3.

[Mathematical Formula 3]

$$HLB = 20 * (M_H / M)$$

In the Mathematical Formula 3, $M_H$ is a molecular weight (or molar mass) of a hydrophilic group, and M is a molecular weight (or molar mass) of the emulsifier.

As a more specific example, the acetylenic diol-based compound may be 2,4,7,9-tetramethyl-5-decyn-4,7-diol. Since the acetylenic diol-based compound does not have an ethylene oxide repeating unit in a structure of the emulsifier, van der Waals interaction with a fluorine-based liquid crystal may be relatively decreased compared to an emulsifier having an ethylene oxide repeating unit. For this reason, as the onset temperature change value according to the Mathematical Formula 1 and the peak temperature change value according to the Mathematical Formula 2 are lowered, the surface anchoring energy of the liquid crystal in the capsule may be sufficiently lowered.

In addition, the emulsifier may include a silicone polyether copolymer containing propylene oxide. The silicone polyether copolymer containing propylene oxide may have a weight average molecular weight of 1000 g/mol or more, or in a range of 1000 g/mol to 50000 g/mol, or in a range of 1000 g/mol to 10000 g/mol, or in a range of 1000 g/mol to 5000 g/mol, or in a range of 2000 g/mol to 3000 g/mol, or in a range of 2800 g/mol to 3000 g/mol.

The silicone polyether copolymer containing propylene oxide may have an HLB (Hydrophile Lipophile Balance) value in a range of 0 to 1. In general, in order to make a stable oil-in-water emulsion using a conventional emulsifier, it is necessary for the emulsifier to be adsorbed at an aqueous phase/oil phase interface to form liquid crystals, and for this purpose, the HLB (Hydrophile Lipophile Balance) value of the emulsifier to be used should be carefully adjusted according to the polarity of the oil phase.

Specifically, the HLB may be calculated by the following Mathematical Formula 3.

[Mathematical Formula 3]

$$HLB = 20 * (M_H / M)$$

In the Mathematical Formula 3, $M_H$ is the molecular weight (or molar mass) of the hydrophilic group, and M is the molecular weight (or molar mass) of the emulsifier.

As a more specific example, the silicone polyether copolymer containing propylene oxide may be a dimethicone graft copolymer of the following Chemical Formula a (weight average molecular weight 3,000; HLB: 0; CAS number 68550-66-4), or a dimethicone linear copolymer of the following Chemical Formula b (weight average molecular weight 2,800; HLB: 0; CAS number 161755-53-9).

[Chemical Formula a]

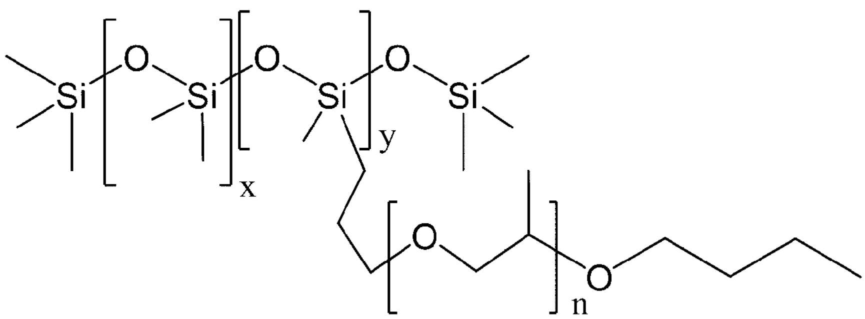

In the Chemical Formula a, x is an integer in a range of 1 to 100, y is an integer in a range of 1 to 100, and n is an integer in a range of 0 to 20.

[Chemical Formula b]

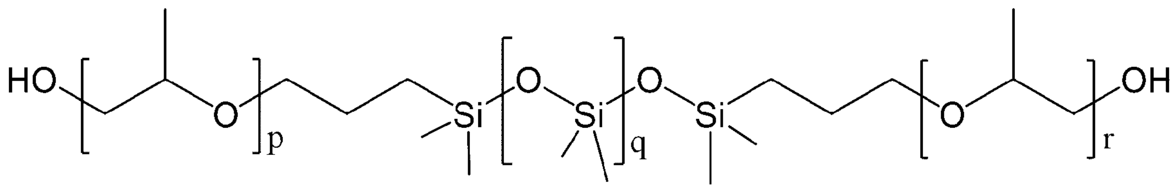

In the Chemical Formula b, p is an integer in a range of 0 to 20, q is an integer in a range of 1 to 100, and r is an integer in a range of 0 to 20.

The silicone polyether copolymer containing propylene oxide increases a surface energy of a surface with which the liquid crystal contacts to induce vertical alignment of the liquid crystal. For this reason, as the onset temperature change value according to the Mathematical Formula 1 and the peak temperature change value according to the Mathematical Formula 2 are lowered, the surface anchoring energy of the liquid crystal in the capsule may be sufficiently lowered.

The siloxane-based additive is an additive capable of lowering the interfacial tension of the liquid crystal. Accordingly, in the liquid crystal nano capsule in which the siloxane-based additive and the liquid crystal are contained together in the core, the surface anchoring energy of the liquid crystal in the capsule may be sufficiently lowered.

The siloxane-based additive may have a molar mass of 500 g/mol or less, or in a range of 100 g/mol to 500 g/mol.

The siloxane-based additive may include a trisiloxane-based compound. The trisiloxane-based compound may include a trisiloxane compound or a derivative thereof. As a specific example, the siloxane-based additive may be octamethyltrisiloxane or hexamethylcyclotrisiloxane.

In addition, the core may further include an anisotropic dye. The anisotropic dye is not particularly limited as long as it is a dopable anisotropic dye, and specifically, there is provided S-428, M-483, M412 (Mitsui Fine Chemical), or the like.

Meanwhile, the liquid crystal nano capsule of the embodiment may include a polymer shell formed on a surface of the core. The shell may be a single-layer shell made of a homopolymer material, or may be a double-layer shell or a plurality of layers shell made of different polymer materials for more improved mechanical properties and particle uniformity. Accordingly, the uniformity of liquid crystal particles may be improved, and at the same time, a contamination problem caused by a dye may be improved.

A material forming the shell has the same refractive index as that of a matrix polymer in which a liquid crystal complex is dispersed, and specific examples thereof are not particularly limited, but for example, may be selected from among polyvinyl alcohol, polyurea, polyurethane, polyamide including nylon, polyacetal, and polyester.

However, as a specific example, the polymer shell formed on the surface of the core may be made of a polyvinyl alcohol (PVA) resin cross-linked with glyoxal. As a type of PVA, there is no particular limitation, and various PVAs having different molecular weights or saponification degrees may be appropriately selected according to a purpose. As a cross-linking agent for cross-linking PVA, glyoxal is used.

Meanwhile, in the liquid crystal nano capsule of the embodiment, a sum of an onset temperature change value according to the following Mathematical Formula 1 and a peak temperature change value according to the following Mathematical Formula 2 may be 37.5 °C or less, or 37 °C or less, or 36 °C or less, or 35 °C or less, or 1 °C or more, or in a range of 1 °C to 37.5 °C, or in a range of 1 °C to 37 °C, or in a range of 1 °C to 36 °C, or in a range of 1 °C to 35 °C.

Onset temperature change value = (Minimum temperature at which endotherm or exotherm occurs during DSC measurement of the liquid crystal nano capsule) - (Minimum temperature at which endotherm or exotherm occurs during DSC measurement of the liquid crystal) [Mathematical Formula 1]

Peak temperature change value = (Temperature at a peak where endotherm or exotherm is maximum during DSC measurement of the liquid crystal nano capsule) - (Temperature at a peak where endotherm or exotherm is maximum during DSC measurement of the liquid crystal). [Mathematical Formula 2]

In the liquid crystal nano capsule of the embodiment, as the onset temperature change value according to the Mathematical Formula 1 and the peak temperature change value according to the Mathematical Formula 2 are lowered together, a sum of the onset temperature change value according to the Mathematical Formula 1 and the peak temperature change value according to the Mathematical Formula 2 also tends to be lowered.

Specifically, when the sum of the onset temperature change value according to the Mathematical Formula 1 and the peak temperature change value according to the Mathematical Formula 2 becomes smaller, it means that the surface anchoring energy of the liquid crystal in the capsule is relatively low, and because of this, the transmittance variation rate may increase even at a low voltage. Specifically, when the sum of the onset temperature change value according to the Mathematical Formula 1 and the peak temperature change value according to the Mathematical Formula 2 becomes smaller, there is provided a liquid crystal nano capsule capable of low-voltage driving at a lower threshold voltage and having a high contrast ratio and excellent transmittance variable characteristics.

On the other hand, when the sum of the onset temperature change value according to the Mathematical Formula 1 and the peak temperature change value according to the Mathematical Formula 2 excessively increases to exceed 37.5 °C, the surface anchoring energy of the liquid crystal in the capsule increases, so that an alignment of the liquid crystal is changed only when a higher voltage is applied, and thus more voltage is required to move the liquid crystal.

An example of a DSC measurement method in the Mathematical Formula 1 and the Mathematical Formula 2 is not significantly limited, and conventionally known DSC measurement equipment, conditions, and methods may be applied without limitation. However, as an example, by using DSC3 equipment of METTLER TOLEDO, a minimum temperature at which endotherms and exotherms occur may be measured while raising a temperature from 25 °C up to 200 °C at a heating rate of 5 °C/min.

More specifically, the liquid crystal nano capsule of the embodiment may have the onset temperature change value according to the Mathematical Formula 1 of 18.5 °C or less, or 18 °C or less, or 17 °C or less, or 16 °C or less, or 15 °C or less, or 14 °C or less, or 1 °C or more, or in a range of 1 °C to 18.5 °C, or in a range of 1 °C to 18 °C, or in a range of 1 °C to 17 °C, or in a range of 1 °C to 16 °C, or in a range of 1 °C to 15 °C, or in a range of 1 °C to 14 °C.

In addition, the liquid crystal nano capsule of the embodiment may have the peak temperature change value

according to the following Mathematical Formula 2 of 21.5 °C or less, or 21 °C or less, or 20 °C or less, or 19 °C or less, or 1 °C or more, or in a range of 1 °C to 21.5 °C, or in a range of 1 °C to 21 °C, or in a range of 1 °C to 20 °C, or in a range of 1 °C to 19 °C.

An average diameter of the liquid crystal nano capsule may be in a range of 200 nm to 300 nm. When the average diameter of the liquid crystal nano capsule is excessively decreased, there is a problem in that a driving voltage increases and power consumption increases. In addition, when the average diameter of the liquid crystal nano capsule is excessively increased, there is a problem in that visible light is scattered and haze increases.

The liquid crystal nano capsule may be a group of individual particles having an average diameter in a range of 200 nm to 300 nm, and individual fine particles included in such a group may have a diameter in a range of 200 nm to 300 nm on average. More specifically, 95% or 99% of individual fine particles included in the group may have a diameter in a range of 200 nm to 300 nm.

The present application also provides uses of the liquid crystal capsule. The liquid crystal capsule of the present application may be used in various light modulation devices to which liquid crystal is applicable. Accordingly, there is provided a light modulation device comprising a substrate; and a liquid crystal layer formed on one surface of the substrate and including the liquid crystal capsule. A manufacturing method and types of the light modulation device are well known in the art, and it may be manufactured using a known manufacturing method without limitation. The light modulation device includes, but is not limited to, a smart window, an isotropic film, a polarization control film, or a flexible LCD.

A manufacturing method of the liquid crystal nano capsule is not significantly limited, and various conventionally known manufacturing methods of liquid crystal nano capsules may be applied without limitation. However, as an example, there is provided a process comprising: (1) preparing a mixed solution by mixing a mixed material containing liquid crystal, an emulsifier, a siloxane-based additive, and polyvinyl alcohol (PVA) in a solvent; (2) forming droplets from the mixed solution; (3) disposing polyvinyl alcohol (PVA) around the droplets; and (4) cross-linking polyvinyl alcohol (PVA) using a cross-linking agent to form a polymer shell surrounding the liquid crystal, thereby manufacturing a liquid crystal nano capsule in which the liquid crystal is encapsulated in the polymer shell.

In the process of (1) preparing the mixed solution by mixing a mixed material containing liquid crystal, an emulsifier, a siloxane-based additive, and polyvinyl alcohol (PVA) in a solvent, there is no particular limitation as the solvent, and it may be appropriately selected according to a purpose. For example, pure water such as ion-exchanged water, ultrafiltration water, reverse osmosis water, and distilled water, or water such as ultrapure water may be used.

In the process of (2) forming droplets from the mixed solution, the droplets are dispersed in a dispersion medium, and more specifically, the droplets are dispersed in the dispersion medium in a state in which the emulsifier covers a periphery of the liquid crystal.

As a method of preparing the droplets, a method of producing droplets using a dispersion-type emulsification device may be used.

As the dispersion-type emulsification device, there is no particular limitation as long as droplets of a desired particle diameter are obtained, and it may be appropriately selected according to a purpose. For example, a homo mixer which is a device for mixing liquids, or a homogenizer which is a device for refining and uniformizing particles may be used. In addition, a dispersion method is not particularly limited, and for example, any dispersion method of stirring, ultrasonic, or high pressure may be used.

In the present invention, as the dispersion-type emulsification device, for example, various dispersion-type emulsification devices such as a high-speed homogenizer, an ultrasonic homogenizer, a high-pressure homogenizer, and a homo mixer may be used.

In addition, as a more preferable embodiment of the process of preparing droplets, there is provided a droplet preparation process including a first preparation process of preparing droplets using a first dispersion-type emulsification device and a second preparation process of preparing droplets having a particle diameter smaller than a particle diameter obtained in the first preparation process using a second dispersion-type emulsification device.

As the first and second dispersion-type emulsification devices, there is no particular limitation as long as droplets of a desired particle diameter are obtained, and for example, the various dispersion-type emulsification devices described above may be used in an appropriate combination.

In the process of (3) disposing polyvinyl alcohol (PVA) around the droplets, coacervation in which PVA gathers around a liquid crystal composition may proceed under a droplet dispersion liquid at a predetermined temperature. As an example, it is preferable to set a solution temperature of the droplet dispersion liquid in the coacervation process to 40 °C or more.

In the process of (4) cross-linking polyvinyl alcohol (PVA) using the cross-linking agent to form the polymer shell surrounding the liquid crystal, thereby manufacturing the liquid crystal nano capsule, the cross-linking reaction is preferably performed under acidic conditions. As the acidic conditions, a pH is preferably in a range of 1 to 5, and more preferably the pH is about 3.

2. Capsule solution

According to another embodiment of the invention, a capsule solution can be provided, comprising the liquid crystal nano capsule of the above embodiment and a solvent.
The details of the liquid crystal nano capsule of the above embodiment all include the details described above in the embodiment.
The solvent is not particularly limited and may be appropriately selected according to a purpose, and for example, there is provided water such as pure water, such as ion-exchanged water, ultrafiltration water, reverse osmosis water, and distilled water, or ultrapure water.
In the capsule solution, the liquid crystal nano capsules are dispersed in the solvent. That is, the capsule solution may be a liquid crystal nano capsule dispersion liquid. The capsule solution is used as a coating liquid for forming a liquid crystal layer. For example, the liquid crystal layer is formed by coating the capsule solution on a support substrate to form a film.

3. Optical film

According to another embodiment of the invention, an optical film can be provided, comprising the liquid crystal nano capsule of the above embodiment.
The details of the liquid crystal nano capsule of the above embodiment all include the details described above in the embodiment.
The optical film may include a matrix and the liquid crystal capsule of the embodiment dispersed inside the matrix. Contents regarding the matrix are not particularly limited, but for example, a transparent material may be used for the matrix. Specific examples of the matrix are not particularly limited, but for example, may be selected from among polyvinyl alcohol, polyurea, polyurethane, polyamide including nylon, polyacetal, and polyester.
As a more specific example, the optical film may be formed by coating the capsule solution of the other embodiment on a support substrate to form a film.
Specific contents regarding the optical film may be applied without limitation to contents regarding various conventionally known optical films. For example, as for the structure, composition, manufacturing method, physical properties, uses, and the like of the optical film, various contents widely known in the conventional film field may be applied without limitation.
However, as an example, the optical film may be used for a transmittance variable film.

4. Optical device

According to another embodiment of the invention, an optical device can be provided, comprising the optical film of the above embodiment.
The details of the optical film of the above embodiment all include the details described above in the embodiment.
Contents regarding the optical device may be applied without limitation to various conventionally known optical devices. For example, as for the specific structure, size, manufacturing method, physical properties, uses, and the like of the optical device, various contents widely known in the conventional display field may be applied without limitation.
However, as an example, the optical device may be a light modulation device including the optical film of the other embodiment. Specific examples of the light modulation device are not particularly limited, but for example, may include a smart window, an isotropic film, a polarization control film, a liquid crystal display , an organic light emitting display , or the like.
More specifically, as an example of the optical device, there is provided a liquid crystal display element having a set of substrates disposed to face each other, electrodes formed on one or both sides of the facing surfaces of each of the set of substrates, a liquid crystal layer formed by coating the liquid crystal nano capsule solution of the present invention disposed between the substrates, and an electric field applying means for applying an electric field to the liquid crystal nano capsule of the present invention in the liquid crystal layer through the electrodes.
The optical device may have a threshold voltage of 64 V or less, or 63 V or less, or 61 V or less, or 1 V or more, or in a range of 1 V to 64 V, or in a range of 1 V to 63 V, or in a range of 1 V to 61 V, or in a range of 60 V to 63 V, or in a range of 60 V to 61 V. The threshold voltage means a voltage at 10% transmittance of maximum transmittance, and as the optical device has the threshold voltage in the aforementioned range, the optical device may be driven even at a lower voltage. A method of measuring the threshold voltage is not limited, and various methods widely known in the field of liquid crystal-containing optical devices may be applied without limitation. However, as an example, it may be measured through a haze meter (NDH7000, Nippon Denshoku) while applying a voltage through a function generator.
In addition, the optical device may have a contrast ratio of 10 or more, or 11 or more, or 20 or less, or in a range of 10 to 20, or in a range of 11 to 20, or in a range of 11.1 to 16.5. The contrast ratio means a ratio between transmittance at a

voltage of 100 V and transmittance at a voltage of 0 V, and as the optical device has the contrast ratio in the aforementioned range, the optical device may implement an excellent transmittance variation rate even at a lower voltage. A method of measuring the contrast ratio is not limited, and various methods widely known in the field of liquid crystal-containing optical devices may be applied without limitation. However, as an example, it may be measured through a haze meter (NDH7000, Nippon Denshoku) while applying a voltage through a function generator.

5. Transmittance variable device

According to another embodiment of the invention, a transmittance variable device can be provided, comprising the optical film of the above embodiment.

The details of the optical film of the above embodiment all include the details described above in the embodiment.

Contents regarding the transmittance variable device may be applied without limitation to various conventionally known transmittance variable devices. For example, as for a specific structure, size, manufacturing method, physical properties, uses, and the like of the transmittance variable device, various contents widely known in a conventional liquid crystal capsule field may be applied without limitation. However, as an example, the transmittance variable device may include a polarizing layer and a transmittance variable layer, and the dichroic dye of the embodiment may be contained in the polarizing layer or the transmittance variable layer as a light modulation material.

The transmittance variable device of the present application may be applied to all devices to which transmittance variability may be applied. For example, the transmittance variable device of the present application may be applied to a sunroof, vehicle glass, goggles, sunglasses, a helmet, or the like to provide a transmittance variable device. As long as the transmittance variable device includes the transmittance variable device of the present application, other components or structures are not particularly limited, and all contents known in this field may be appropriately applied. There is provided a transmittance variable device in which the transmittance variable device is applied to a sunroof, vehicle glass, goggles, sunglasses, or a helmet.

[Advantageous Effects]

According to the present invention, there may be provided a liquid crystal nano capsule, and capsule solution, optical film, optical device, transmittance variable device using the same that may induce a high transmittance variation rate even at a lower voltage by lowering the surface interaction energy of the liquid crystal encapsulated inside the capsule.

[DETAILED DESCRIPTION OF THE EMBODIMENTS]

Hereinafter, the present disclosure will be explained in detail with reference to the following examples. However, these examples are for illustrative purposes only, and the scope of the present disclosure is not limited thereto.

<EXAMPLE : Manufacturing of liquid crystal nano capsule and capsule solution>

Example 1

0.125 g (0.25 wt% based on the total weight of the aqueous solution) of an emulsifier (2,4,7,9-tetramethyl-5-decyn-4,7-diol, HLB: 3) was added to an aqueous solution in which 0.7 g of polyvinyl alcohol (PVA) and 49.3 g of water were mixed, and the mixture was stirred to be dissolved. Thereafter, 2.2 g of liquid crystal (1,2,3-Trifluoro-5-[(trans,trans)-4'-ethyl[1,1'-bicyclohexyl]-4-yl]benzene; manufactured by TCI), 0.11 g of anisotropic dye (Sudan Black B), and 0.023 g of octamethyltrisiloxane (1 wt% based on the total weight of the mixture of the liquid crystal and the anisotropic dye) were added, and a first emulsification was performed at 18,000 rpm for 1 hour through an IKA homogenizer T25. Thereafter, a second emulsification was performed 5 times at 10,000 psi through a Microfluidizer to form droplets.

Thereafter, the temperature of the solution was raised to 40 °C under stirring, and the PVA was adsorbed onto the surface of the droplets for 18 hours.

Thereafter, 0.8 g of a 40% glyoxal aqueous solution was introduced as a crosslinking agent, and the pH of the solution was adjusted to 3 to crosslink the adsorbed PVA at 40 °C for 18 hours.

After the solution was concentrated for 1 hour using a rotary evaporator, the supernatant was recovered by centrifugation at 5,000 rpm for 30 minutes to remove unencapsulated liquid crystal, thereby obtaining a capsule solution containing the liquid crystal nano capsule.

Example 2

A liquid crystal nano capsule and a capsule solution were prepared in the same manner as in Example 1, except

that 0.25 g (0.5 wt% based on the total weight of the aqueous solution) of a Dimethicone graft copolymer of the following Chemical Formula a (weight average molecular weight: 3,000; HLB: 0; CAS number 68550-66-4) was introduced instead of 0.125 g (0.25 wt% based on the total weight of the aqueous solution) of 2,4,7,9-tetramethyl-5-decyn-4,7-diol as the emulsifier.

[Chemical Formula a]

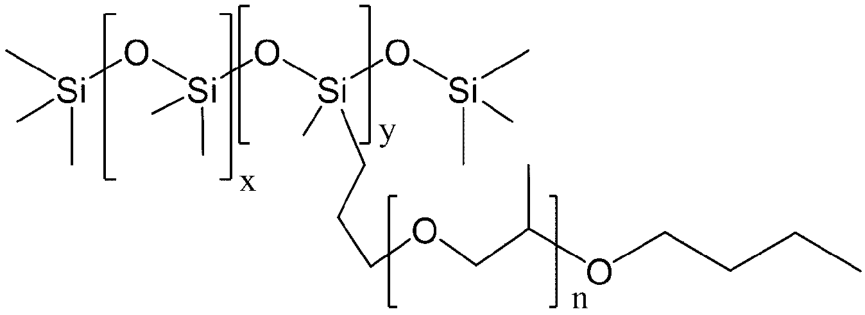

In the Chemical Formula a, x is an integer in a range of 1 to 100, y is an integer in a range of 1 to 100, and n is an integer in a range of 0 to 20.

Example 3

A liquid crystal nano capsule and a capsule solution were prepared in the same manner as in the Example 1, except that 0.25 g (0.5 wt% based on the total weight of the aqueous solution) of a Dimethicone linear copolymer of the following Chemical Formula b (weight average molecular weight: 2,800; HLB: 0; CAS number 161755-53-9) was introduced instead of 0.125 g (0.25 wt% based on the total weight of the aqueous solution) of 2,4,7,9-tetramethyl-5-decyn-4,7-diol as the emulsifier.

[Chemical Formula b]

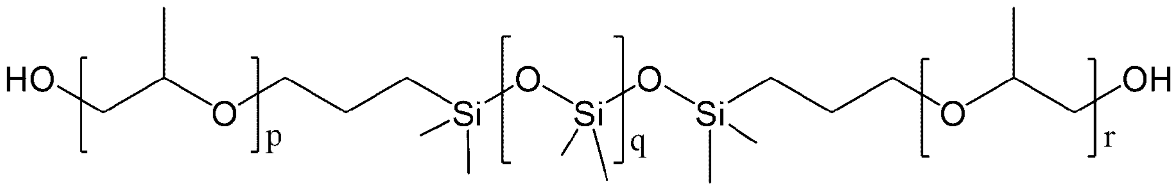

In the Chemical Formula b, p is an integer in a range of 0 to 20, q is an integer in a range of 1 to 100, and r is an integer in a range of 0 to 20.

< COMPARATIVE EXAMPLE: Manufacturing of liquid crystal nano capsule and capsule solution>

Comparative Example 1

A liquid crystal nano capsule and a capsule solution were prepared in the same manner as in the Example 1, except that octamethyltrisiloxane was not used.

Comparative Example 2

A liquid crystal nano capsule and a capsule solution were prepared in the same manner as in the Example 2, except that octamethyltrisiloxane was not used.

Comparative Example 3

A liquid crystal nano capsule and a capsule solution were prepared in the same manner as in the Example 3, except that octamethyltrisiloxane was not used.

Comparative Example 4

A liquid crystal nano capsule and a capsule solution were prepared in the same manner as in the Example 1, except that 0.25 g (0.50 wt% based on the total weight of the aqueous solution) of Ethoxylated tetramethyl decynediol (EO 1.3 mol; CAS number: 9014-85-1) was used instead of 0.125 g (0.25 wt% based on the total weight of the aqueous solution) of 2,4,7,9-tetramethyl-5-decyn-4,7-diol as the emulsifier.

<EXPERIMENTAL Example>

With respect to the liquid crystal nano capsule or the capsule solution obtained in the above Examples and Comparative Examples, physical properties were measured by the following method, and the results are shown in Table 1.

1. Physical properties of liquid crystal nano capsule

(1) Average diameter of capsule in capsule solution (nm)

The average diameter (nm) of the capsules was measured using a Malvern Zetasizer zs with 4 mL of a diluted capsule solution (mixed with water and capsule solution at a weight ratio of 4:1) under conditions of RI: 1.5 and 25 °C.

(2) Ratio of liquid crystal in capsule solution (mass %)

After freeze-drying 5 mL of the capsule solution, the mass was measured to calculate the solid content per unit volume. 1 mg of the freeze-dried capsule solution was introduced into a TGA2 equipment of METTLER TOLEDO, and the temperature was raised from 50 °C to 700 °C at a heating rate of 10 °C/min, and then mass reduction according to temperature was checked. The ratio of liquid crystal in the capsule solution (mass %) was obtained through the mass ratio reduced in a range of 200 °C to 300 °C.

2. Physical properties of liquid crystal nano capsule film

(1) Thickness (μm)

1 mL of the capsule solution was coated on the ITO of a PET-ITO film with a 200 μm film applicator, and then dried at 70 °C for 2 hours to prepare a liquid crystal nano capsule film. The thickness of the liquid crystal nano capsule film was measured through Alpha step (KLA TENCOR).

(2) $T_{off}$ (%), $Haze_{off}$ (%), Threshold Voltage (V), CR

After laminating the ITO surface of the PET-ITO film (GMP EXCELAM-SMART 655) on the top of the liquid crystal nano capsule film, electrode tape was attached to the ITO surface. $T_{off}$, which is the transmittance of the liquid crystal nano capsule film to which no voltage is applied (transmittance at an applied voltage of 0 V), and $Haze_{off}$, which is the haze of the liquid crystal nano capsule film to which no voltage is applied (haze at an applied voltage of 0 V), were measured through a haze meter (Nippon Denshoku, NDH7000). And, while applying a voltage through a function generator, the threshold voltage, which is the voltage at 10% transmittance of the maximum transmittance, and the contrast ratio (CR), which is the ratio between the transmittance at a voltage of 100 V and the transmittance at a voltage of 0 V, were measured through a haze meter (Nippon Denshoku, NDH7000).

3. Tni analysis of liquid crystal

A pan was positioned in a DSC3 equipment of METTLER TOLEDO, and 0.5 mL of the capsule solution was introduced, and the temperature was raised from 25 °C to 200 °C at a heating rate of 5 °C/min to measure an onset temperature, which is the minimum temperature at which endothermic and exothermic reactions start to be observed, and a peak temperature, at which endothermic and exothermic reactions occur most actively. In addition, the onset temperature (121 °C) of free liquid crystal not encapsulated in the capsule was measured, and an Onset temperature change value (ΔOnset) was calculated by the following Mathematical Formula 1.

Onset temperature change value = (Minimum temperature at which endotherm or exotherm occurs during DSC measurement of the liquid crystal nano capsule) - (Minimum temperature at which endotherm or exotherm occurs during DSC measurement of the liquid crystal) [Mathematical Formula 1]

In addition, the peak temperature (125 °C) of free liquid crystal not encapsulated in the capsule was measured, and a Peak temperature change value (ΔPeak) was calculated by the following Mathematical Formula 2.

Peak temperature change value = (Temperature at a peak where endotherm or exotherm is maximum during DSC measurement of the liquid crystal nano capsule) - (Temperature at a peak where endotherm or exotherm is maximum during DSC measurement of the liquid crystal) [Mathematical Formula 2]

[Table 1]

| Experimental Example Measurement Results | | | | | | | | |
|---|---|---|---|---|---|---|---|---|
| Category | | Example 1 | Example 2 | Example 3 | Comparative Example1 | Comparative Example2 | Comparative Example3 | Comparative Example4 |
| Emulsifier | | 2,4,7,9-tetra-methyl -5-de-cyn-4,7-diol | Dimethicone graft copoly-mer | Dimethicone linear copoly-mer | 2,4,7,9 - tetram ethyl-5-decyn-4,7-diol | Dimet hicone graft copoly-mer | Dimet hicone linear copoly-mer | Ethoxylated tet-ramethyl decy-nediol |
| Additive | | Octamethyl trisi-loxane | Octamethyl trisiloxane | octamethylt ri-siloxane | - | - | - | octamethylt risi-loxane |
| Liquid crystal nan o cap sule | Average diameter (nm) | 268.0 | 291.5 | 281.2 | 284.4 | 304.8 | 290.1 | 148.7 |
| | Ratio of liquid crystal in capsule solution (mass %) | 17.1 | 14.0 | 14.8 | 17.3 | 11.4 | 15.0 | 16.7 |
| Liquid crystal nan o capsule film | Thickness (μm) | 14.8 | 16.2 | 15.6 | 15.3 | 16.5 | 15.3 | 14.4 |
| | $T_{off}$(% ) | 1.8 | 1.9 | 1.9 | 0.9 | 1.0 | 1.6 | 0.5 |
| | $Haze_{off}$ (%) | 33.6 | 35.6 | 31.1 | 37.4 | 34.7 | 34.7 | 11.3 |
| | Threshold Voltage (V) | 60 | 60 | 63 | 65 | 80 | 75 | 80 |
| | CR @100 V | 16.5 | 12.1 | 11.1 | 16.9 | 10.6 | 9.8 | 10.0 |
| Tni analysis of liquid crystal | Onset temperature (°C) | 135 | 137 | 139 | 140 | 140 | 140 | 140 |
| | Peak temperature (°C) | 146 | 146 | 145 | 147 | 144 | 149 | 150 |
| | Heat of Endot hermic or Exothermic reaction (J/g) | 1107.5 | 993.4 | 1201.0 | 978.3 | 941.3 | 1243.2 | 1557.1 |
| | ΔOnset | 14 | 16 | 18 | 19 | 19 | 19 | 19 |
| | ΔPeak | 21 | 21 | 19 | 22 | 19 | 24 | 25 |
| | (ΔOns et + ΔPeak ) | 35 | 37 | 37 | 41 | 38 | 43 | 44 |

As shown in the Table 1, the liquid crystal nano capsule of the Example was measured to have a value of (△Onset + △Peak) in a range of 35 °C to 37 °C, which was lower than those of the Comparative Examples. Accordingly, the liquid crystal nano capsule film of the Example was measured to have a threshold voltage in a range of 60 V to 63 V, which was lower than those of the Comparative Examples, and it was confirmed that driving is possible even at a lower voltage. In addition, the liquid crystal nano capsule film of the Example was measured to have a contrast ratio in a range of 11.1 to 16.5, which was equivalent to or higher than those of the Comparative Examples, and it was confirmed that an excellent transmittance variation rate may be realized even at a lower voltage.

## Claims

1. A liquid crystal nano capsule, comprising:

   a core containing liquid crystal; and
   a polymer shell formed on a surface of the core;
   wherein a sum of an onset temperature change value according to the following Mathematical Formula 1 and a peak temperature change value according to the following Mathematical Formula 2 is 37.5 °C or less:

   Onset temperature change value = (Minimum temperature at which endotherm or exotherm occurs during DSC measurement of the liquid crystal nano capsule) - (Minimum temperature at which endotherm or exotherm occurs during DSC measurement of the liquid crystal) [Mathematical Formula 1]

   Peak temperature change value = (Temperature at a peak where endotherm or exotherm is maximum during DSC measurement of the liquid crystal nano capsule) - (Temperature at a peak where endotherm or exotherm is maximum during DSC measurement of the liquid crystal). [Mathematical Formula 2]

2. The liquid crystal nano capsule according to claim 1,
   wherein the onset temperature change value according to the Mathematical Formula 1 is 18.5 °C or less.

3. The liquid crystal nano capsule according to claim 1,
   wherein the peak temperature change value according to the Mathematical Formula 2 is 21.5 °C or less.

4. The liquid crystal nano capsule according to claim 1,
   wherein the core further comprises an emulsifier and a siloxane-based additive.

5. The liquid crystal nano capsule according to claim 4,
   wherein the emulsifier has a content of an ethylene oxide repeating unit of less than 0.001 mol% based on 100 mol% of the emulsifier.

6. The liquid crystal nano capsule according to claim 4,
   wherein the emulsifier comprises an acetylenic diol-based compound, or a silicone polyether copolymer containing propylene oxide.

7. The liquid crystal nano capsule according to claim 4,
   wherein the siloxane-based additive has a molar mass of 500 g/mol or less.

8. The liquid crystal nano capsule according to claim 4,
   wherein the siloxane-based additive comprises a trisiloxane-based compound.

9. The liquid crystal nano capsule according to claim 4,
   wherein the siloxane-based additive is octamethyltrisiloxane, or hexamethylcyclotrisiloxane.

10. The liquid crystal nano capsule according to claim 4,
    wherein a content of the siloxane-based additive is in a range of 5 parts by weight to 50 parts by weight based on 100

parts by weight of the emulsifier.

**11.** The liquid crystal nano capsule according to claim 1, wherein the liquid crystal is a fluorine-based liquid crystal.

**12.** The liquid crystal nano capsule according to claim 1, wherein an average diameter of the liquid crystal nano capsule is in a range of 200 nm to 300 nm.

**13.** A capsule solution, comprising the liquid crystal nano capsule of claim 1 and a solvent.

**14.** An optical film, comprising the liquid crystal nano capsule of claim 1.

**15.** An optical device, comprising the optical film of claim 14.

**16.** A transmittance variable device, comprising the optical film of claim 14.

**TRANSLATION**

## INTERNATIONAL SEARCH REPORT

International application No.
**PCT/KR2025/095549**

**A. CLASSIFICATION OF SUBJECT MATTER**

**C09K 19/52**(2006.01)i; **C09K 19/54**(2006.01)i; **G02F 1/1334**(2006.01)i

According to International Patent Classification (IPC) or to both national classification and IPC

**B. FIELDS SEARCHED**

Minimum documentation searched (classification system followed by classification symbols)

C09K 19/52(2006.01); C08K 9/04(2006.01); C08K 9/10(2006.01); C09K 19/02(2006.01); C09K 19/04(2006.01); C09K 19/12(2006.01); C09K 19/18(2006.01); C09K 19/54(2006.01); G02F 1/1334(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 액정 나노캡슐(liquid crystal nanocapsule), 코어(core), 중합체 쉘(polymer shell), 유화제(emulsifier), 실록산계 첨가제(siloxane-based additive), 광학 필름(optical film)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0115566 A (LG DISPLAY CO., LTD.) 23 October 2018 (2018-10-23)<br>claims 1, 8; paragraphs [0013], [0014], [0039], [0053], [0081], [0082], [0087], [0120], [0121], [0126] | 1-16 |
| A | WO 2017-178419 A1 (MERCK PATENT GMBH) 19 October 2017 (2017-10-19)<br>claims 1-21 | 1-16 |
| A | US 2021-0189240 A1 (NITTO DENKO CORPORATION) 24 June 2021 (2021-06-24)<br>claim 1; paragraph [0085] | 1-16 |
| A | KR 10-2017-0052783 A (KOREA RESEARCH INSTITUTE OF CHEMICAL TECHNOLOGY) 15 May 2017 (2017-05-15)<br>claims 1-10 | 1-16 |
| A | KR 10-2019-0039639 A (MERCK PATENT GMBH) 15 April 2019 (2019-04-15)<br>claims 1-15 | 1-16 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 December 2025** | **19 December 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**TRANSLATION**

**INTERNATIONAL SEARCH REPORT**
**Information on patent family members**

International application No.
**PCT/KR2025/095549**

| Patent document cited in search report | Publication date (day/month/year) | Patent family member(s) | Publication date (day/month/year) |
|---|---|---|---|
| KR 10-2018-0115566 A | 23 October 2018 | CN 108732810 A | 02 November 2018 |
| | | CN 108732810 B | 24 August 2021 |
| | | EP 3399006 A2 | 07 November 2018 |
| | | EP 3399006 A3 | 20 March 2019 |
| | | EP 3399006 B1 | 17 February 2021 |
| | | JP 2018-180536 A | 15 November 2018 |
| | | JP 6760989 B2 | 23 September 2020 |
| | | KR 10-2297989 B1 | 02 September 2021 |
| | | TW 201837554 A | 16 October 2018 |
| | | TW I665492 B | 11 July 2019 |
| | | US 11073714 B2 | 27 July 2021 |
| | | US 11619842 B2 | 04 April 2023 |
| | | US 2018-0299712 A1 | 18 October 2018 |
| | | US 2021-0311337 A1 | 07 October 2021 |
| WO 2017-178419 A1 | 19 October 2017 | CN 109072081 A | 21 December 2018 |
| | | EP 3443050 A1 | 20 February 2019 |
| | | EP 3443050 B1 | 29 January 2020 |
| | | JP 2019-515989 A | 13 June 2019 |
| | | KR 10-2018-0130569 A | 07 December 2018 |
| | | TW 201807165 A | 01 March 2018 |
| | | US 2019-0127642 A1 | 02 May 2019 |
| US 2021-0189240 A1 | 24 June 2021 | CN 109415630 A | 01 March 2019 |
| | | US 11186773 B2 | 30 November 2021 |
| | | WO 2017-180923 A1 | 19 October 2017 |
| KR 10-2017-0052783 A | 15 May 2017 | KR 10-1824679 B1 | 02 February 2018 |
| KR 10-2019-0039639 A | 15 April 2019 | CN 109627658 A | 16 April 2019 |
| | | CN 109627658 B | 17 February 2023 |
| | | EP 3467074 A1 | 10 April 2019 |
| | | EP 3467074 B1 | 01 July 2020 |
| | | JP 2019-070798 A | 09 May 2019 |
| | | TW 201925439 A | 01 July 2019 |
| | | US 10793776 B2 | 06 October 2020 |
| | | US 2019-0106627 A1 | 11 April 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240133749


### Non-patent literature cited in the description


- *CHEMICAL ABSTRACTS*, 68550-66-4
- *CHEMICAL ABSTRACTS*, 161755-53-9
- *CHEMICAL ABSTRACTS*, 9014-85-1